# EUROPÄISCHE PATENTSCHRIFT

(11) **EP 1 166 215 B1**
(45) Veröffentlichungstag und Bekanntmachung des Hinweises auf die Patenterteilung: **27.11.2002**
(21) Anmeldenummer: 00925037.4
(22) Anmeldetag: 09.03.2000
(51) Int. Cl.: G06F 17/50, G05B 17/02

(54) **VERFAHREN ZUR AUTOMATISCHEN WIEDERGEWINNUNG VON ENGINEERINGDATEN AUS ANLAGEN**
METHOD FOR THE AUTOMATIC RETRIEVAL OF ENGINEERING DATA OF SYSTEMS
PROCEDE PERMETTANT DE RECUPERER AUTOMATIQUEMENT DES DONNEES TECHNIQUES CONTENUES DANS DES INSTALLATIONS

(30) Priorität: 09.03.1999 DE 19910535
(43) Veröffentlichungstag der Anmeldung: 02.01.2002
(73) Patentinhaber: SIEMENS AKTIENGESELLSCHAFT, 80333 München (DE)
(72) Erfinder: DIEZEL, Matthias, D-90482 Nürnberg (DE); LANGE, Ronald, D-90766 Fürth (DE); LANGKAFEL, Dirk, D-91090 Effeltrich (DE); SCHNEIDER, Karsten, D-91054 Erlangen (DE); WINDL, Helmut, D-93077 Bad Abbach (DE); BIEHLER, Georg, D-90453 Nürnberg (DE); LEINS, Ralf, D-75228 Ispringen (DE); ECKARDT, Dieter, D-91074 Herzogenaurach (DE); KRÄMER, Manfred, D-90530 Wendelstein (DE); BECKER, Norbert, D-91058 Erlangen (DE); DONNER, Albrecht, D-09236 Markersdorf (DE)
(86) Internationale Anmeldenummer: DE0000735
(87) Internationale Veröffentlichungsnummer: WO00054188

(56) Entgegenhaltungen:
- ELMQVIST: "A Uniform Architecture for Distributed Control" ADVANCES IN INSTRUMENTATION AND CONTROL, Bd. 46 Teil 2, 1991, Seiten 1599-1608, XP000347589 Research Triangle Park, NC, US

## Beschreibung

Die Erfindung betrifft ein Verfahren zur automatischen Wiedergewinnung von Engineeringdaten aus Anlagen.

Ein derartiges Automatisierungssystem kommt insbesondere im Bereich der Automatisierungstechnik zum Einsatz. Ein derartiges Automatisierungssystem besteht in der Regel aus einer Vielzahl von einzelnen Automatisierungsobjekten, die häufig eine hohe Abhängigkeit des Automatisierungsobjekts vom jeweils verwendeten Engineeringsystem aufweisen.

Momentan gibt es zwei grundsätzliche Verfahren, die eingesetzt werden. Im ersten Verfahren, wird die Wiedergewinnung der Engineeringdaten aus der Anlage ausgeschlossen. Änderungen der Anlage sind nur über das Engineeringwerkzeug möglich. Damit geben die Daten im Engineeringsystem stets den aktuellen Stand wieder und die Notwendigkeit des Rückspielens der Information aus der Anlage entfällt. Diese Lösung besitzt die folgenden Nachteile:
- **Starke Kopplung zwischen Runtime und Engineering:** Das Engineeringsystem muß mit der Anlage ausgeliefert werden und auch vom Kunden extra bezahlt werden.
- **Änderungen in der Anlage können nicht nachvollzogen werden:** Kommt es zu Änderungen in der Anlage, beispielsweise durch Austausch eines Geräts, können diese Änderungen nicht automatisch im Engineeringsystem nachvollzogen werden.
- **Hoher organisatorischer Aufwand:** Um die Engineeringdaten aktuell zu halten, müssen organisatorische Vorkehrungen getroffen werden, durch die sichergestellt wird, wie Änderungen in der Anlage in das Engineeringsystem eingebracht werden.

Der zweite Ansatz beruht auf einer Disassemblierung des Runtimecodes. Dabei wird der ausführbare Code der Runtimeobjekte analysiert und in die Gegenstücke des Engineering übersetzt. Diese Lösung besitzt die folgenden Nachteile:
- Aufwendiges Verfahren: Die Analyse des Runtimecodes ist komplex und anfällig für Fehler.
- Implementierungsabhängig: Die Implementierung der Rückübersetzung ist stark abhängig von der Realisierung des Übersetzungsvorgangs Änderungen des Übersetzungsvorgangs und vor allem des erzeugten Codes erzwingen die Anpassung der Implementierung des Rückübersetzungsvorgangs.
- ES-Information nicht mehr eindeutig herstellbar: Da der Runtimecode sich auf einer semantisch niedrigeren Ebene befindet als die eigentliche Engineeringinformation, kann nicht gewährleistet werden, daß die Engineeringinformation sich exakt rekonstruieren läßt.

In dem Fachartikel Elmqvist, H.: "A Uniform Architecture for Distributed Automation", Advances in Instrumentation and Control, Bd. 46, Teil 2, 1991, Seiten 1599-1608, Research Triangle Park, NC, US, wird ein Automatisierungssystem beschrieben, dessen Objekte in einer objekt- und datenflussorientierten Programmiersprache programmiert sind. Es nutzt eine graphische Programmierumgebung und bietet Mittel für die Erstellung von dynamisch aktualisierten Prozessbildern. Die Programmiersprache erlaubt eine automatische Kommunikation zwischen verteilten Objekten.

Das der Erfindung zugrunde liegende Problem besteht darin, dass die in einer Anlage enthaltenen Informationen automatisch in ein Engineeringsystem zurückgespielt und dort wieder benutzt werden können, beispielsweise um Änderungen in der Anlage zu projektieren.

Diese Aufgabe wird durch ein Verfahren sowie durch ein System mit den in den Ansprüchen 1 bzw. 8 angegebenen Merkmalen gelöst.

Dabei werden die Objekte des Engineering und der Runtime werden durch ein einheitliches Objektmodell beschrieben. Dadurch läßt sich die Entsprechung zwischen Engineeringobjekten und Runtimeobjekten auf Objektebene festlegen und es tritt kein Informationsverlust durch die Abbildung auf. Zusätzlich kann eine direkte Kommunikation zwischen Engineering- und Runtimeobjekten stattfinden, was bei der Realisierung des Verfahrens ausgenutzt werden kann.

Der Zusammenhang zwischen einem Engineeringobjekt und seinem Runtimegegenstück ist in Bild 1 beschrieben. Das Engineeringobjekt ESO besitzt einen direkten Verweis, RTO Ref, auf seine Runtimeentsprechung RTO. Dies ist möglich, da zum Zeitpunkt des Engineering die Runtimeobjekte verfügbar sind (oder werden). Das Runtimeobjekt RTO besitzt keinen direkten Verweis auf das dazugehörige Engineeringobjekt. Dies ist notwendig, um eine Trennung des Engineering- und Runtimesystems zu ermöglichen. Statt dessen enthält das objekt RTO einen identifizierenden Bezeichner, ESO Typ ID, auf den Typ des Engineeringobjekts, ESO Typ. Damit können dann benötigte Instanzen des ESO Typs durch das RTO erzeugt werden.

Bezogen auf ein Runtimeobjekt RTO läuft das Verfahren zur Wiederherstellung der Engineeringinformation folgendermaßen ab:
1. Bekommt ein Runtimeobjekt den Auftrag seine Engineeringinformation wiederherzustellen, so wendet es sish zuerst dann an den Typ seines Engineeringobjekts mit dem Auftrag eine neue Instanz eines Engineeringobjekts zu erzeugen.
2. Bei der neu erzeugten Instanz trägt das Runtimeobjekt einen Verweis auf sich selbst ein und beauftragt das neue Engineeringobjekt seine Daten (die des Runtimeobjekts) auszulesen.
3. Das neue Engineeringobjekt liest nun die Informationen aus dem Runtimeobjekt und trägt bei sich die entsprechende Engineeringinformation ein.

Im folgenden wird die Erfindung anhand der in den Figuren dargestellten Ausführungsbeispiele näher beschrieben und erläutert.

Es zeigen:

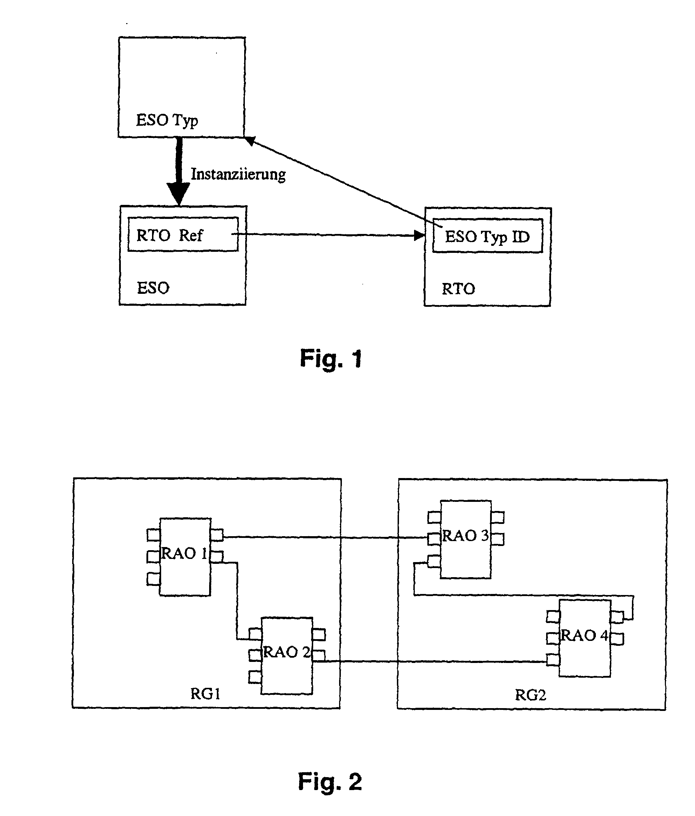

- FIG 1: ein Übersichtsbild zur Kennzeichnung der Beziehungen zwischen Engineeringobjekten und Runtimeobjekten,
- FIG 2: eine beispielhafte Objektsicht einer Anlage,

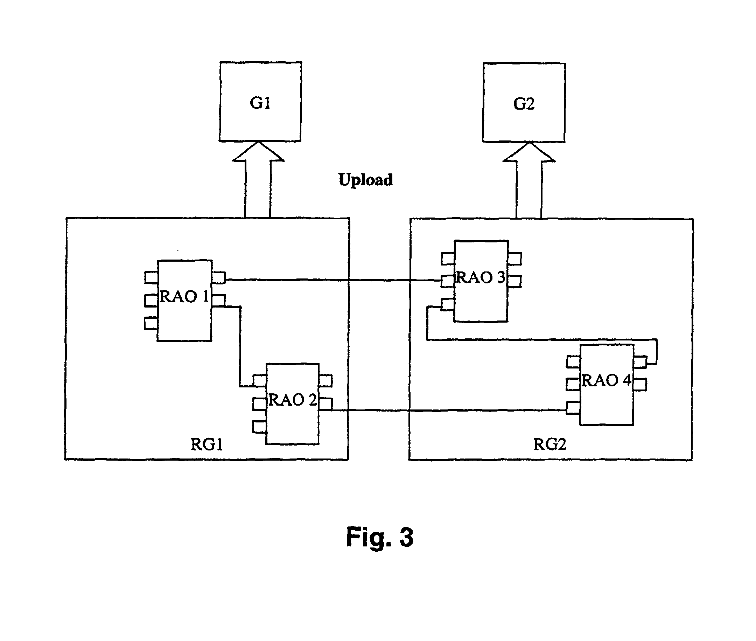

- FIG 3: eine Veranschaulichung zum Erzeugen von Geräterepräsentanten im Engineering,

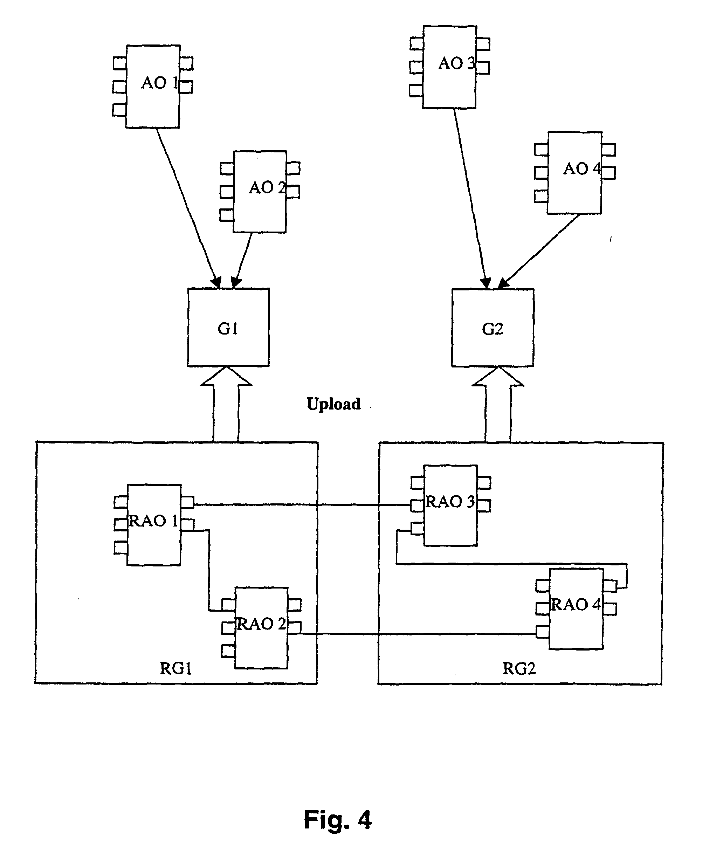

- FIG 4: eine beispielhafte Darstellung zur Erzeugung der Automatisierungsobjekte in den Geräterepräsentanten und

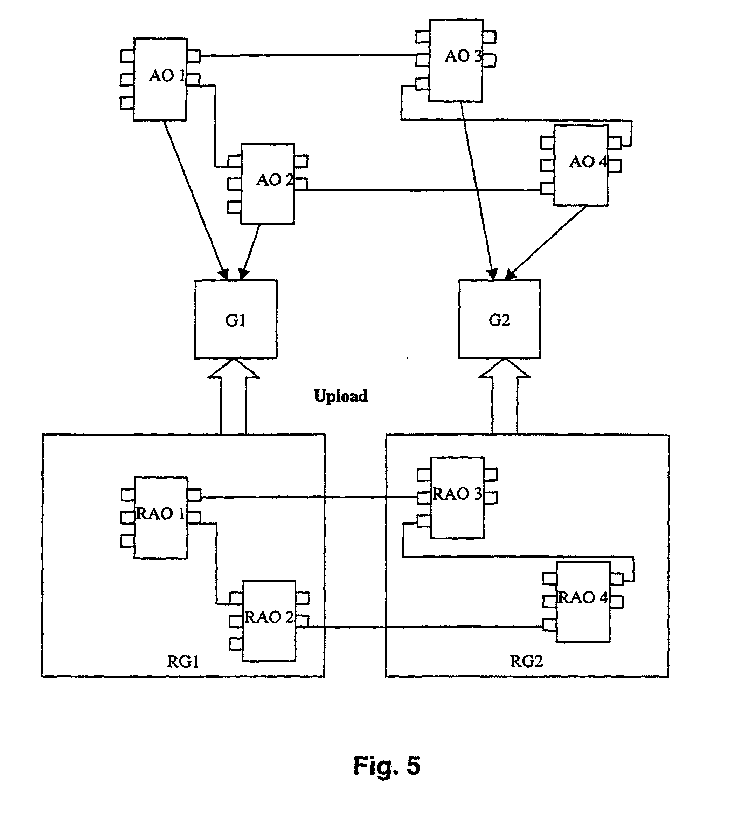

- FIG 5: einen Aufbau der vorhandenen Kommunikationsbeziehungen im Engineering.

Das Verfahren zur Wiedergewinnung der Engineeringinformation aus der Anlage läuft in drei Schritten ab:
- Wiederherstellung der Geräterepräsentanten
- Wiederherstellung der Repräsentanten der Automatisierungsobjekte im Engineering
- Wiederherstellung der Kommunikationsbeziehungen zwischen den Repräsentanten der Automatisierungsobjekte

Das Verfahren wird im folgenden für die vollständige Wiedergewinnung der Engineeringinformation beschrieben. Es läßt sich aber genauso zur Aktualisierung bereits bestehender Engineeringinformation, d.h. als Deltaverfahren, nutzen. Im weiteren wird das gesamte Verfahren mit Upload bezeichnet. In Bild 2 sind exemplarisch die beteiligten Objekte aufgeführt. Auf den zwei Geräten, RG1 und RG2, laufen jeweils zwei Automatisierungsobjekte. Die Automatisierungsobjekte RAO1 und RAO2 laufen auf RG1, RAO3 und RAO4 auf RG2. Kommunikationsverbindungen sind durch Linien symbolisiert. Insgesamt existieren also zwei geräteinterne und zwei geräteübergreifende Kommunikationsbeziehungen.

### 1. Wiederherstellung der Geräterepräsentanten

Der Beginn des Uploads wird aus einem Softwaresystem heraus angestoßen. Dabei kann es sich um ein Engineeringsystem oder ein beliebiges anderes System, das Engineeringinformation benötigt, handeln. Ein Beispiel hierfür ist ein System zur Parametrierung der Anlage. Der Einfachheit halber wird im folgenden immer von einem Engineeringsystem gesprochen.
Im ersten Schritt werden alle Geräte aufgefordert ihre Repräsentation im Engineering zu erzeugen. Dazu lieferte jedes Gerät einen Identifier des Typs seines Engineeringgegenstücks zurück. Das Engineeringsystem erzeugt dann die entsprechenden Objekte und trägt bei jedem Geräterepräsentanten den Verweis auf das konkrete Gerät ein. Mittels des Verweise liest jeder Geräterepräsentant dann die relevanten Daten "seines" Geräts aus.
Bild 3 veranschaulicht das eben Beschriebene. Die Geräte der Anlage, hier RG1 und RG2, erhalten die Aufforderung zum Upload durch das Engineeringsystem. Sie liefern dann jeweils die Identifier der Typen der Engineeringrepräsentanten zurück. Das Engineeringsystem erzeugt für die entsprechenden Typen die Instanzen G1 und G2. Diese lesen dann aus den Geräten RG1 und RG2 die relevanten Engineeringinformation aus.

### 2. Wiederherstellung der Automatisierungsobjekte Im Engineering

Im zweiten Schritt werden die Repräsentanten der Automatisierungsobjekte im Engineering erzeugt. Über das ihm zugeordnete Gerät fordert jeder Geräterepräsentant die Automatisierungsobjekte seines Geräts auf, ihre Entsprechungen im Engineering zu erzeugen. Dazu liefert jedes Automatisierungsobjekt den Identifier des Typs seines Engineeringrepräsentanten zurück. Im Engineeringsystem werden dann wieder die entsprechenden Objekte erzeugt und mit einem Verweis auf ihren Partner in der Runtimeumgebung versehen. Danach frägt jedes Automatisierungsobjekt im Engineering die relevanten Daten seines Partners ab.
Das Ergebnis dieses Vorgangs ist in Bild 4 zu sehen. Der Repräsentant G1 fragt von dem Gerät RG1 die Automatisierungsobjekte RAO1 und RAO2 ab. Dies werden dann von G1 zum Upload aufgefordert und liefern die Identifier der Typen von AO1 und AO2 zurück. Mittels dieser Information werden im Engineering die Instanzen AO1 und AO2 erzeugt. Diese erhalten dann eine Referenz auf ihre Runtimependants RAO1 und RAO2 werden schließlich dem Geräterepräsentanten G1 zugeordnet. Dadurch ist die Information über die Gerätezuordnung der Automatisierungsobjekte wieder verfügbar. Anschließend lesen AO1 und AO2 aus RAO1 und RAO2 die für das Engineering relevanten Informationen heraus.

### 3. Wiederherstellung der Kommunikationsbeziehungen zwischen den Automatisierungsobjekten im Engineering

Im letzten Schritt werden die Kommunikationsbeziehungen zwischen den Automatisierungsobjekten wiederhergestellt. Dazu fragt jeder Geräterepräsentant das ihm zugeordnete Gerät nach seinen Kommunikationsbeziehungen. Das Gerät liefert dann eine Liste mit sowohl den geräteinternen als auch geräteübergreifenden Kommunikationsbeziehungen zurück. Ein Eintrag dieser Liste besteht aus Quelle und Senke der Kommunikationsbeziehung. Quelle und Senke werden jeweils durch ein 3-Tupel aus dem Identifier des physikalischen Geräts, dem Identifier des Automatisierungobjekts und dem Identifier des Ein- bzw. Ausgangs beschrieben.

Im Engineeringsystem werden die Einträge der Liste in Verweise auf die Ein- und Ausgänge der Repräsentanten der Automatisierungsobjekte umgesetzt. Dazu wird die Information aus den bereits erzeugten Objekten (die Verweise der Engineeringrepräsentanten auf ihre Runtimegegenstücke) benutzt. Anschließend wird dann die Verbindung im Engineeringsystem aufgebaut.

Eine effiziente Realisierung dieses Schritts wird darauf achten, daß die vom jeden Gerät erzeugte Liste mit Kommunikationsverbindungen nur solche enthält, bei denen das Gerät im Identifier der Quelle (alternativ der Senke) auftaucht. Des weiteren wird ein effektives Verfahren die in den Schritten 1 und 2 aufgebauten Beziehungen zwischen Engineeringrepräsentanten und Runtimegegenstücken zwischenspeichern, um so den Suchaufwand in Schritt 3 zu minimieren.

Bild 5 zeigt nun das Ergebnis des letzten Schritts. G1 hat von RG1 die Kommunikationsbeziehungen abgefragt. Dabei wurden die Beziehung zwischen RAO1 und RAO2, RAO1 und RAO3 sowie zwischen RAO2 und RAO4 zurückgeliefert. Die Verbindungen werden dann im Engineering umgesetzt, beispielsweise die Verbindung zwischen RAO1 und RAO3 wird zu der Verbindung zwischen AO1 und AO3.

Sowohl die Objekte des Engineeringsystems als auch des Runtimesystems beruhen auf dem gleichen, ausführbaren Objektmodell. Durch die Verwendung des gleichen Modells ist eine direkte Interaktion auf Modellebene (Datenaustausch und Kommunikation) zwischen den Engineering- und Runtimeobjekten möglich. Des weiteren wird über die definierte Zuordnung zwischen den Objekten des Engineering und der Runtime eine eindeutige Abbildung definiert, die unabhängig von der Implementierung der Objekte ist.

Dadurch ergeben sich für das Verfahren folgende Vorteile:
**Trennung von Engineering und Runtime möglich:** Änderungen müssen nicht notwendigerweise mit dem Engineeringwerkzeug durchgeführt. Bei Bedarf können die Änderungen jederzeit in das Engineeringsystem eingespielt werden.
**Einfaches Verfahren:** Durch die Festlegung des Verfahrens auf Ebene expliziter Modelle läßt sich das Verfahren generell beschreiben und wird so zuverlässiger.
**Einfache und vollständige Abbildung:** Zwischen den Runtimeund Engineeringobjekten besteht eine fest definierte Beziehung, die ein vollständiges Wiederherstellen der Engineeringinformation ermöglicht.
**Stabil gegen Implementierungsänderungen:** Die Implementierung der Runtime- und Engineeringobjekte kann ausgewechselt werden, ohne daß dies Einfluß auf die Abbildung und damit die Realisierung des Verfahrens hat.
**Werkzeugübergreifend:** Der Uploadmechanismus kann auch durch andere Werkzeuge und nicht nur durch das Engineeringsystem benutzt werden.

## Patentansprüche

1. Verfahren zur automatischen Wiedergewinnung von Engineeringdaten aus einem Automatisierungssystem mit einer Vielzahl von einzelnen Automatisierungsobjekten (RAO1..RAO4), bei welchem Verfahren
- zur Wiederherstellung von Repräsentanten (G1, G2, AO1..AO4) in einem Engineeringsystem ausgehend von entsprechenden Objekten (RG1, RG2, RAO1..RAO4) des Automatisierungssystems
- die Objekte (RG1, RG2, RAO1..RAO4) des Automatisierungssystems eine Typidentifikation ihres jeweiligen Repräsentanten (G1, G2, AO1..AO4) an das Engineeringsystem liefern,
- das Engineeringsystem für die bezeichneten Typidentifikationen entsprechende Repräsentanten (G1, G2, AO1..AO4) erzeugt und bei den Repräsentanten (G1, G2, AO1..AO4) jeweils einen Verweis auf das entsprechende Objekt (RG1, RG2, RAO1..RAO4) einträgt
- und mittels des Verweises jeder Repräsentant (G1, G2, AO1..AO4) Engineeringinformationen aus dem entsprechenden Objekt (RG1, RG2, RAO1..RAO4) ausliest.

2. Verfahren nach Anspruch 1,
wobei
in einem ersten Schritt zur Wiederherstellung von Geräterepräsentanten (G1, G2) im Engineeringsystem
- Geräte (RG1, RG2), auf denen die Automatisierungsobjekte (RAO1..RAO4) laufen, eine Typidentifikation ihres jeweiligen Geräterepräsentanten (G1, G2) an das Engineeringsystem liefern,
- das Engineeringsystem für die bezeichneten Typidentifikationen entsprechende Geräterepräsentanten (G1, G2) erzeugt und bei den Geräterepräsentanten (G1, G2) jeweils einen Verweis auf das entsprechende Gerät (RG1, RG2) einträgt
- und mittels des Verweises jeder Geräterepräsentant (G1, G2) Engineeringinformationen aus dem entsprechenden Gerät (RG1, RG2) ausliest und
in einem zweiten Schritt zur Wiederherstellung von Repräsentanten (AO1..AO4) der Automatisierungsobjekte (RAO1..RAO4) im Engineeringsystem
- die Automatisierungsobjekte (RAO1..RAO4) eine Typidentifikation (ESO Typ ID) ihres jeweiligen Repräsentanten (AO1..AO4) an das Engineeringsystem liefern,
- das Engineeringsystem für die bezeichneten Typidentifikationen entsprechende Repräsentanten (AO1..AO4) erzeugt und bei den Repräsentanten (AO1..AO4) jeweils einen Verweis auf das entsprechende Automatisierungsobjekt (RAO1..RAO4) einträgt
- und mittels des Verweises jeder Repräsentant (AO1..AO4) Engineeringinformationen aus dem entsprechenden Automatisierungsobjekt (RAO1..RAO4) ausliest.

3. Verfahren nach Anspruch 2,
wobei
in einem dritten Schritt zur Wiederherstellung von Kommunikationsbeziehungen zwischen den Repräsentanten (AO1..AO4) der Automatisierungsobjekte (RAO1..RAO4) im Engineeringsystem
- die Geräte (RG1, RG2) Listen mit Kommunikationsbeziehungen an das Engineeringsystem liefern,
- im Engineeringsystem Einträge der Listen in Verweise auf Eingänge und Ausgänge der Repräsentanten (AO1..AO4) der Automatisierungsobjekte (RAO1..RAO4) umgesetzt werden und anschließend entsprechende Verbindungen im Engineeringsystem aufgebaut werden.

4. Verfahren nach einem der vorhergehenden Ansprüche,
wobei
sowohl die Repräsentanten des Engineeringsystems (G1, G2, AO1..AO4) als auch die Objekte (RG1, RG2, RAO1..RAO4) des Automatisierungssystems durch ein einheitliches, ausführbares Objektmodell beschrieben werden und eine direkte Kommunikation auf Modellebene zwischen den Repräsentanten des Engineeringsystems (G1, G2, AO1..AO4) und den Objekten(RG1, RG2, RAO1..RAO4) des Automatisierungssystems möglich ist.

5. Verfahren nach Anspruch 3 oder 4,
wobei
Einträge in die Listen mit Kommunikationsbeziehungen Quellen und Senken der Kommunikationsbeziehungen enthalten, wobei die Quellen und Senken jeweils durch ein 3-Tupel aus einem Identifier des Geräts (RG1, RG2), einem Identifier des Automatisierungsobjekts (RAO1..RAO4) und einem Identifier des Ein- bzw. Ausgangs beschrieben werden.

6. Verfahren nach einem der vorhergehenden Ansprüche,
wobei
die Objekte (RG1, RG2, RAO1..RAO4) des Automatisierungssystems keinen direkten Verweis auf die dazugehörigen Repräsentanten des Engineeringsystems (G1, G2, AO1..AO4) besitzen um eine Trennung des Engineering- und Automatisierungssystems zu ermöglichen.

7. Verfahren nach einem der vorhergehenden Ansprüche,
wobei
das Verfahren zur Aktualisierung bereits bestehender Engineeringinformation als Deltaverfahren genutzt wird.

8. System zur automatischen Wiedergewinnung von Engineeringdaten aus einem Automatisierungssystem mit einer Vielzahl von einzelnen Automatisierungsobjekten (RAO1..RAO4), bei dem
- zur Wiederherstellung von Repräsentanten (G1, G2, AO1..AO4) in einem Engineeringsystem ausgehend von entsprechenden Objekten (RG1, RG2, RAO1..RAO4) des Automatisierungssystems
- die Objekte (RG1, RG2, RAO1..RAO4) des Automatisierungssystems eine Typidentifikation ihres jeweiligen Repräsentanten (G1, G2, AO1..AO4) zur Lieferung an das Engineeringsystem enthalten,
- das Engineeringsystem Mittel zur Erzeugung von Repräsentanten (G1, G2, AO1..AO4) für die bezeichneten Typidentifikationen und Mittel zur Eintragung jeweils eines Verweises auf das entsprechende Objekt (RG1, RG2, RAO1..RAO4) bei den Repräsentanten (G1, G2, AO1..AO4) enthält,
- wobei der Verweis zum Auslesen von Engineeringinformationen aus dem entsprechenden Objekt (RG1, RG2, RAO1..RAO4) durch jeden Repräsentanten (G1, G2, AO1..AO4) vorgesehen ist.

9. System nach Anspruch 8,
wobei
zur Wiederherstellung von Geräterepräsentanten (G1, G2) im Engineeringsystem
- Geräte (RG1, RG2), auf denen die Automatisierungsobjekte (RAO1..RAO4) laufen, eine Typidentifikation ihres jeweiligen Geräterepräsentanten (G1, G2) zur Lieferung an das Engineeringsystem enthalten,
- das Engineeringsystem Mittel zur Erzeugung von Geräterepräsentanten (G1, G2) für die bezeichneten Typidentifikationen und Mittel zur Eintragung jeweils eines Verweises auf das entsprechende Gerät (RG1, RG2) bei den Geräterepräsentanten (G1, G2) enthält,
- wobei der Verweis zum Auslesen von Engineeringinformationen aus dem entsprechenden Gerät (RG1, RG2) durch jeden Geräterepräsentanten (G1, G2) vorgesehen ist und
zur Wiederherstellung von Repräsentanten (AO1..AO4) der Automatisierungsobjekte (RAO1..RAO4) im Engineeringsystem
- die Automatisierungsobjekte (RAO1..RAO4) eine Typidentifikation (ESO Typ ID) ihres jeweiligen Repräsentanten (AO1..AO4) zur Lieferung an das Engineeringsystem enthalten,
- das Engineeringsystem Mittel zur Erzeugung von Repräsentanten (AO1..AO4) für die bezeichneten Typidentifikationen und Mittel zur Eintragung jeweils eines Verweises auf das entsprechende Automatisierungsobjekt (RAO1..RAO4) bei den Repräsentanten (AO1..AO4) enthält,
- wobei der Verweis zum Auslesen von Engineeringinformationen aus dem entsprechenden Automatisierungsobjekt (RAO1..RAO4) durch jeden Repräsentanten (AO1..AO4) vorgesehen ist.

10. System nach Anspruch 9,
wobei
zur Wiederherstellung von Kommunikationsbeziehungen zwischen den Repräsentanten (AO1..AO4) der Automatisierungsobjekte (RAO1..RAO4) im Engineeringsystem
- die Geräte (RG1, RG2) Listen mit Kommunikationsbeziehungen zur Lieferung an das Engineeringsystem enthalten und
- das Engineeringsystem Mittel zur Umsetzung von Einträgen der Listen in Verweise auf Eingänge und Ausgänge der Repräsentanten (AO1..AO4) der Automatisierungsobjekte (RAO1..RAO4) und Mittel zum Aufbau der entsprechenden Verbindungen im Engineeringsystem enthält.

11. System nach einem der Ansprüche 8 bis 10,
wobei
sowohl die Repräsentanten des Engineeringsystems (G1, G2, AO1..AO4) als auch die Objekte (RG1, RG2, RAO1..RAO4) des Automatisierungssystems durch ein einheitliches, ausführbares Objektmodell beschrieben werden und eine direkte Kommunikation auf Modellebene zwischen den Repräsentanten des Engineeringsystems (G1, G2, AO1..AO4) und den Objekten (RG1, RG2, RAO1..RAO4) des Automatisierungssystems vorgesehen ist.

12. System nach Anspruch 10 oder 11,
wobei
Einträge in die Listen mit Kommunikationsbeziehungen Quellen und Senken der Kommunikationsbeziehungen enthalten,
wobei die Quellen und Senken jeweils durch ein 3-Tupel aus einem Identifier des Geräts (RG1, RG2), einem Identifier des Automatisierungsobjekts (RAO1..RAO4) und einem Identifier des Ein- bzw. Ausgangs beschrieben werden.

13. System nach einem der Ansprüche 8 bis 12,
wobei
die Objekte (RG1, RG2, RAO1..RAO4) des AutomatisierungsSystems keinen direkten Verweis auf die dazugehörigen Repräsentanten des Engineeringsystems (G1, G2, AO1..AO4) besitzen um eine Trennung des Engineering- und Automatisierungssystems zu ermöglichen.

14. System nach einem der Ansprüche 8 bis 13,
wobei
das System zur Aktualisierung bereits bestehender Engineeringinformation genutzt wird.

## Claims

1. Method for the automatic retrieval of engineering data from an automation system with a multiplicity of individual automation objects (RAO1..RAO4), in which method
- for the restoration of representatives (G1 G2, AO1..AO4) in an engineering system on the basis of corresponding objects (RG1, RG2, RAO1..RAO4) of the automation system
- the objects (RG1, RG2, RAO1..RAO4) of the automation system supply a type identification of their respective representative (G1, G2, AO..AO4) to the engineering system,
- the engineering system creates corresponding representatives (G1, G2, AO1..AO4) for the designated type identifications and in the case of each of the representatives (G1 G2, AO1..AO4) enters a reference to the corresponding object (RG1, RG2, RAO1..RAO4)
- and, by means of the reference, each representative (G1, G2, AO1..AO4) reads out engineering information from the corresponding object (RG1, RG2, RAO1..RAO4).

2. Method according to Claim 1, whereby, in a first step for the restoration of device representatives (G1, G2) in the engineering system
- devices (RG1, RG2) on which the automation objects (RAO1..RAO4) run supply type identification of their respective device representative (G1, G2) to the engineering system,
- the engineering system creates corresponding device representatives (G1, G2) for the designated type identifications and in the case of each of the device representatives (G1, G2) enters a reference to the corresponding device (RG1, RG2)
- and, by means of the reference, each device representative (G1, G2) reads out engineering information from the corresponding device (RG1, RG2) and,
in a second step for the restoration of representatives (AO1..AO4) of the automation objects (RAO1..RAO4) in the engineering system
- the automation objects (RAO1..RAO4) supply a type identification (ESO type ID) of their respective representative (AO1..AO4) to the engineering system,
- the engineering system creates corresponding representatives (AO1..AO4) for the designated type identifications and in the case of each of the representatives (AO1..AO4) enters a reference to the corresponding automation object (RAO1..RAO4)
- and, by means of the reference, each representative (AO1..AO4) reads out engineering information from the corresponding automation object (RAO1..RAO4).

3. Method according to Claim 2, whereby, in a third step for the restoration of communication relationships between the representatives (AO1..AO4) of the automation objects (RAO1..RAO4) in the engineering system
- the devices (RG1, RG2) supply lists of communication relationships to the engineering system,
- in the engineering system, entries in the lists are converted into references to inputs and outputs of the representatives (AO1..AO4) of the automation objects (RAO1..RAO4) and, subsequently, corresponding connections are set up in the engineering system.

4. Method according to one of the preceding claims, whereby both the representatives of the engineering system (G1, G2, AO1..AO4) and the objects (RG1, RG2, RAO1..RAO4) of the automation system are described by a uniform, executable, object model and a direct communication at model level is possible between the representatives of the engineering system (G1, G2, AO1..AO4) and the objects (RG1, RG2, RAO1..RAO4) of the automation system.

5. Method according to Claim 3 or 4, whereby entries in the lists of communication relationships contain sources and drains of the communication relationships, the sources and drains in each case being described by a 3-tuple from an identifier of the device (RG1, RG2), an identifier of the automation object (RAO1..RAO4) and an identifier of the input or output.

6. Method according to one of the preceding claims, whereby the objects (RG1, RG2, RAO1..RAO4) of the automation system have no direct reference to the associated representatives of the engineering system (G1, G2, AO1..AO4), to make it possible for the engineering system and automation system to be separated.

7. Method according to one of the preceding claims, whereby the method is used for the updating of already existing engineering information as a delta method.

8. System for the automatic retrieval of engineering data from an automation system with a multiplicity of individual automation objects (RAO1..RAO4), in which
- for the restoration of representatives (G1, G2, AO1..AO4) in an engineering system on the basis of corresponding objects (RG1, RG2, RAO1..RAO4) of the automation system,
- the objects (RG1, RG2, RAO1..RAO4) of the automation system contain a type identification of their respective representative (G1, G2, AO1..AO4) for supply to the engineering system,
- the engineering system contains means for creating representatives (G1, G2, AO1..AO4) for the designated type identifications and means for entering in the case of each of the representatives (G1, G2, AO1..AO4) a reference to the corresponding object (RG1, (RG2, RAO1..RAO4),
- the reference being provided for the reading out of engineering information from the corresponding object (RG1, RG2, RAO1..RAO4) by each representative (G1, G2, AO1..AO4).

9. System according to Claim 8, whereby, for the restoration of device representatives (G1, G2) in the engineering system
- devices (RG1, RG2) on which the automation objects (RAO1..RAO4) run contain a type identification of their respective device representative (G1, G2) for supply to the engineering system,
- the engineering system contains means for creating device representatives (G1, G2) for the designated type identifications and means for entering in the case of each of the device representatives (G1 G2) a reference to the corresponding device (RG1, RG2),
- the reference being provided for the reading out of engineering information from the corresponding device (RG1, RG2) by each device representative (G1, G2) and
for the restoration of representatives (AO1..AO4) of the automation objects (RAO1..RAO4) in the engineering system
- the automation objects (RAO1..RAO4) contain a type identification (ESO type ID) of their respective representative (AO1..AO4) for supply to the engineering system,
- the engineering system contains means for creating representatives (AO1..AO4) for the designated type identifications and means for entering in the case of each of the representatives (AO1..AO4) a reference to the corresponding automation object (RAO1..RAO4),
- the reference being provided for the reading out of engineering information from the corresponding automation object (RAO1..RAO4) by each representative (AO1..AO4).

10. System according to Claim 9, whereby, for the restoration of communication relationships between the representatives (AO1..AO4) of the automation objects (RAO1..RAO4) in the engineering system
- the devices (RG1, RG2) contain lists of communication relationships for supply to the engineering system and
- the engineering system contains means for converting entries in the lists into references to inputs and outputs of the representatives (AO1..AO4) of the automation objects (RAO1..RAO4) and means for setting up the corresponding connections in the engineering system.

11. System according to one of Claims 8 to 10, whereby both the representatives of the engineering system (G1 G2, AO1..AO4) and the objects (RG1, RG2, RAO1..RAO4) of the automation system are described by a uniform, executable object model and a direct communication at model level is provided between the representatives of the engineering system (G1, G2, AO1..AO4) and the objects (RG1, RG2, RAO1..RAO4) of the automation system.

12. System according to Claim 10 or 11, whereby entries in the lists of communication relationships contain sources and drains of the communication relationships, the sources and drains in each case being described by a 3-tuple from an identifier of the device (RG1, RG2), an identifier of the automation object (RAO1..RAO4) and an identifier of the input or output.

13. System according to one of Claims 8 to 12, whereby the objects (RG1, RG2, RAO1..RAO4) of the automation system have no direct reference to the associated representatives of the engineering system (G1, G2, AO1..AO4), to make it possible for the engineering system and automation system to be separated.

14. System according to one of Claims 8 to 13, whereby the system is used for the updating of already existing engineering information.

## Revendications

1. Procédé pour récupérer automatiquement des données techniques contenues dans un système d'automatisation ayant un grand nombre d'objets d'automatisation (RAO1.. RAO4) particuliers, dans lequel procédé
• pour restituer des représentants (G1, G2, AO1.. AO4) dans un système technique en partant d'objets correspondants (RG1, RG2, RAO1.. RAO4) du système d'automatisation,
• les objets (RG1, RG2, RAO1.. RAO4) du système d'automatisation fournissent au système technique une identification de type de leur représentant respectif (G1, G2, AO1.. AO4),
• le système technique produit, pour les identifications de type désignées, des représentants correspondants (G1, G2, AO1.. AO4) et pour les représentants (G1, G2, AO1.. AO4) enregistre respectivement une référence à l'objet correspondant (RG1, RG2, RAO1.. RAO4),
• et au moyen de la référence chaque représentant (G1, G2, AO1.. AO4) lit des informations techniques à partir de l'objet correspondant (RG1, RG2, RAO1.. RAO4).

2. Procédé selon la revendication 1 pour lequel, dans une première étape pour restituer les représentants des appareils (G1, G2) dans le système technique,
• les appareils (RG1, RG2) sur lesquels sont réalisés les objets d'automatisation (RAO1, AO2) fournissent au système technique une identification de type de leur représentant de l'appareil (G1, G2) respectif,
• le système technique pour les identifications de type décrites produit des représentants des appareils (G1, G2) correspondants et enregistre respectivement une référence à l'appareil (RG1, RG2) correspondant pour les représentants des appareils (G1, G2),
• et au moyen de la référence chaque représentant des appareils (G1, G2) lit les informations techniques à partir dé l'appareil (RG1, RG2) correspondant et,
dans une deuxième étape pour restituer les représentants (AO1.. AO4) des objets d'automatisation (RAO1, RAO2) dans le système technique,
• les objets d'automatisation (RAO1.. RAO4) fournissent au système technique une identification de type (ESO Typ ID) de son représentant (AO1.. AO4) respectif,
• le système technique produit, pour les identifications de type décrites, des représentants (AO1.. AO4) correspondants et enregistre respectivement pour les représentants (AO1.. AO4) une référence à l'objet d'automatisation (RAO1.. RAO4) correspondant
• et au moyen de la référence chaque représentant (AO1.. AO4) lit les informations techniques à partir de l'objet d'automatisation (RAO1.. RAO4) correspondant.

3. Procédé selon la revendication 2 pour lequel, dans une troisième étape pour restituer les relations de communication entre les représentants (AO1.. AO4) des objets d'automatisation (RAO1.. RAO2) dans le système technique,
• les appareils (RG1, RG2) fournissent au système technique des listes avec les relations de communication,
• dans le système technique les enregistrements des listes sont converties en des les références aux entrées et aux sorties des représentants (AO1.. AO4) des objets d'automatisation (RAO1.. RAO2) puis les liaisons correspondantes sont élaborées dans le système technique.

4. Procédé selon l'une des revendications précédentes dans lequel aussi bien les représentants du système technique (G1, G2, AO1.. AO4) que les objets (RG1, RG2, RAO1.. RAO4) du système d'automatisation sont décrits par un modèle d'objet uniforme exécutable et pour lequel une communication directe au niveau de modèle entre les représentants du système technique (G1, G2, AO1.. AO4) et les objets (RG1, RG2, RAO1.. RAO4) du système d'automatisation est possible.

5. Procédé selon la revendication 3 ou 4 dans lequel les enregistrements dans les listes avec les relations de communication contiennent des sources et des collecteurs des relations de communication, les sources et les collecteurs étant à chaque fois décrits par un 3-tuple provenant d'un identificateur de l'appareil (RG1, RG2), d'un identificateur de l'objet d'automatisation (RAO1.. RAO4) et d'un identificateur d'entrée et de sortie.

6. Procédé selon l'une des revendications précédentes pour lequel, afin de permettre une séparation entre le système technique et le système d'automatisation, les objets (RG1, RG2, RAO1.. RAO4) du système d'automatisation ne possèdent pas de référence directe aux représentants, qui en font partie, du système technique (G1, G2, AO1.. AO4).

7. Procédé selon l'une des revendications précédentes dans lequel le procédé est utilisé en tant que procédé delta pour actualiser l'information technique déjà existante.

8. Système pour récupérer automatiquement des données techniques contenues dans un système d'automatisation ayant un grand nombre d'objets d'automatisation (RAO1..RAO4) particuliers, dans lequel,
• pour restituer des représentants (G1, G2, AO1.. AO4) dans un système technique en partant d'objets correspondants (RG1, RG2, RAO1.. RAO4) du système d'automatisation,
• les objets (RG1, RG2, RAO1.. RAO4) du système d'automatisation contiennent une identification de type de leur représentant respectif (G1, G2, AO1.. AO4) à fournir au système technique,
• le système technique contient des moyens destinés à produire des représentants (G1, G2, AO1.. AO4) pour les identifications de type décrites et des moyens pour enregistrer respectivement une référence à l'objet correspondant (RG1, RG2, RAO1.. RAO4) pour les représentants (G1, G2, AO1.. AO4),
• dans lequel on prévoit la référence destinée à ce que chaque représentant (G1, G2, AO1.. AO4) lise les informations techniques à partir de l'objet correspondant (RG1, RG2, RAO1.. RAO4).

9. Système selon la revendication 8 dans lequel, pour restituer les représentants des appareils (G1, G2) dans le système technique,
• les appareils (RG1, RG2) sur lesquels fonctionnent les objets d'automatisation (RAO1.. RAO4) contiennent une identification de type de leur représentant de l'appareil (G1, G2) respectif à fournir au système technique,
• le système technique contient des moyens pour produire des représentants de l'appareil (G1, G2) pour les identifications de type décrits et des moyens pour enregistrer respectivement une référence à l'appareil correspondant (RG1, RG2) pour les représentants des appareils (G1, G2),
• dans lequel on prévoit la référence destinée à ce que chaque représentant de l'appareil (G1, G2) lise les informations techniques à partir de l'appareil correspondant (RG1, RG2).et
pour restituer les représentants (AO1.. AO4) des objets d'automatisation (RAO1.. RAO4) dans le système technique
• les objets d'automatisation (RAO1.. RAO4) contiennent une identification de type (ESO Typ ID) de leur représentant (AO1.. AO4) respectif à livrer au système technique,
• le système technique contient des moyens pour produire des représentants (AO1.. AO4) pour les identifications de type décrites et des moyens pour enregistrer respectivement une référence à l'objet d'automatisation (RAO1.. RAO4) correspondant pour les représentants (AO1.. AO4)
• dans lequel on prévoit la référence destinée à ce que chaque représentant (AO1.. AO4) lise les informations techniques à partir de l'objet d'automatisation (RAO1.. RAO4).

10. Système selon la revendication 9 dans lequel, pour restituer les relations de communication entre les représentants (AO1.. AO4) des objets d'automatisation (RAO1.. RAO2) dans le système technique,
• les appareils (RG1, RG2) contiennent des listes avec les relations de communication à fournir au système technique et
• le système technique contient des moyens pour convertir les enregistrements des listes en références aux entrées et aux sorties des représentants (AO1.. AO4) des objets d'automatisation (RAO1.. RAO2) et des moyens pour élaborer les liaisons correspondantes dans le système technique.

11. Système selon l'une des revendications 8 à 10 dans lequel aussi bien les représentants du système technique (G1, G2, AO1.. AO4) que les objets (RG1, RG2, RAO1.. RAO4) du système d'automatisation sont décrits par un modèle d'objet uniforme et exécutable et une communication directe au niveau de modèle est prévue entre les représentants du système technique (G1, G2, AO1.. AO4) et les objets (RG1, RG2, RAO1.. RAO4) du système d'automatisation.

12. Système selon la revendication 10 ou 11 dans lequel les enregistrements dans les listes avec les relations de communication contiennent des sources et des collecteurs, les sources et les collecteurs étant à chaque fois décrits par un 3-tuple provenant d'un identificateur de l'appareil (RG1, RG2), d'un identificateur de l'objet d'automatisation (RAO1.. RAO4) et d'un identificateur d'entrée ou de sortie.

13. Système selon l'une des revendications 8 à 12 dans lequel les objets (RG1, RG2, RAO1.. RAO4) du système d'automatisation ne possèdent pas de référence directe aux représentants, qui lui appartiennent, du système technique (G1, G2, AO1.. AO4) afin de permettre une séparation entre le système technique et le système d'automatisation.

14. Système selon l'une des revendications 8 à 13 dans lequel le système est utilisé pour actualiser l'information technique déjà existante.
